# EUROPÄISCHE PATENTSCHRIFT

(11) **EP 3 153 793 B1**
(45) Veröffentlichungstag und Bekanntmachung des Hinweises auf die Patenterteilung: **26.09.2018**
(21) Anmeldenummer: 16002175.4
(22) Anmeldetag: 05.10.2016
(51) Int. Cl.: F24S 25/636

(54) **Montagesystem für Plattenförmige Körper, insbesondere Solarmodule**
Mounting system for plate-like bodies, in particular for solar modules
Système de montage pour objets en forme de plaque, notamment pour modules solaires

(30) Priorität: 06.10.2015 DE 102015013262
(43) Veröffentlichungstag der Anmeldung: 12.04.2017
(73) Patentinhaber: S:FLEX GmbH, 21029 Hamburg (DE)
(72) Erfinder: Wolff, Lutz, 17268 Milmersdorf (DE)
(74) Vertreter: Kietzmann, Manfred

(56) Entgegenhaltungen:
- EP-A1- 2 270 402
- EP-A1- 2 476 972
- EP-A1- 2 620 720
- EP-A1- 3 018 429
- EP-A2- 2 733 439
- WO-A1-2014/059760
- KR-A- 20100 063 509
- US-A1- 2010 269 447
- US-A1- 2013 011 187

## Beschreibung

Die Erfindung betrifft ein Montagesystem für plattenförmige Körper, insbesondere Solarmodule auf Montageschienen, vorzugsweise mit einem geschlossenen Hohlkastenprofil, mittels Befestigungsmitteln, wobei die Verbindung zwischen den Befestigungsmitteln und den Montageschienen durch eine Clickverbindung herstellbar ist und die Befestigungsmittel unter Einschluss der plattenförmigen Körper mit den Montageschienen verspannbar sind.

Derartige Montagesysteme sind bekannt.

So werden in der DE 10 2005 000 129 A1 an einem Gewindeniet angeordnete zwei gegenüberliegende Schenkel in eine an den Rändern gekröpft ausgebildete, oben in der Montageschiene angeordnete Montageöffnung eingeclickt, wobei sie die gekröpften Ränder hinterfassen und ein Niederhalter für die Solarmodule mit dem Gewindeniet verspannt wird.

Bei dem Montagesystem nach dem EP 2 029 946 B1 werden gegenüberliegend an einem Formstück angeordnete Schenkel von oben in ein beabstandet in einem geschlossenen Hohlkastenprofil der Montageschiene angeordneten Längsnutpaar auf die Montageschiene aufgeclickt. Das Formstück wird mit einem Niederhalter für die Solarmodule mittels eines Spannbolzens verspannt, so dass sich die Schenkel in die Längsnute einkrallen.
Ein ähnliches Spannteil ist aus der DE 20 2012 012 290 U1 bekannt.
Auch das in der DE 10 2004 044 103 A1 genutzte Formteil zur Solarmodulbefestigung weist zwei gegenüberliegende Seitenschenkel auf, die jeweils seitlich auf ein gekröpft ausgebildetes Doppel-T-Profil einer Montageschiene vorzugsweise aufgefädelt werden.
Weiter wird in der US 2010/0269447 A1 eine technische Lösung offenbart, bei der eine Montageschiene mittels einer Clickverbindung auf einer Unterkonstruktion befestigt wird und auf der Montageschiene z. B. ein Solarmodul unter Nutzung einer Aufclickverbindung, einem Spannteil und einem Niederhalter montierbar ist. Die Clickverbindungen übergreifen jeweils Stege auf beiden Seiten der Montageschiene.

Nachteilig bei diesen Lösungen ist es, dass sie materialintensiv durch die Paarigkeit der Schenkel zum Verspannen sind. Die Paarigkeit ist auch mit Ursache dafür, dass sie auf ein bestimmtes Grundprofil der Montageschiene beschränkt sind.
Aufgabe der Erfindung ist es, ein Montagesystem für plattenförmige Körper, insbesondere Solarmodule vorzuschlagen, das ein Verspannen der Solarmodule mit Montageschienen mit unterschiedlichem Grundprofil zulässt und materialsparend ist.
Gelöst wird diese Aufgabe mit den Merkmalen des
Anspruches 1. Vorteilhafte Ausgestaltungen sind Gegenstand der Unteransprüche.
Das erfindungsgemäße Montagesystem für plattenförmige Körper auf eine Auflagefläche von Montageschienen mittels Befestigungsmitteln, umfassend zumindest eine Montageschiene und zumindest ein Befestigungsmittel aus Spannteilen, Niederhaltern für die plattenförmigen Körper und einer Schraubverbindung zwischen den Niederhaltern und den Spannteilen, wobei die Verbindung zwischen den Spannteilen und den Montageschienen durch eine mindestens formschlüssige Clickverbindung herstellbar ist und die Befestigungsmittel unter Einschluss der plattenförmigen Körper mit den Montageschienen verspannbar sind, sieht vor, dass die Montageschienen ein- oder beidseitig jeweils einen Steg oder zwei Stege jeweils von der Montageschiene wegweisend und in Montageschienenlängsrichtung verlaufend aufweisen,
wobei der erste Steg auf der den plattenförmigen Körpern angewandten Seite eine in Montageschienenlängsrichtung verlaufende Hinterschneidung besitzt und
bei einem zweiten Steg dieser beabstandet zum ersten Steg angeordnet ist und auf der dem ersten Steg zugewandten Seite eine Hinterschneidung aufweist, sowie das Spannteil einschenklig ausgebildet ist und an dem der Montageschiene zugewandten Ende des einen Schenkels mindestens zwei seitlich angeordnete Klauen aufweist, die auf den ersten Steg aufclickbar sind und/oder in den Raum zwischen den beiden Stegen einclickbar sind.

Das Spannteil ist einschenklig ausgebildet, was zu mindestens 30% Materialeinsparung führt.
Aufclicken bedeutet, dass der Abstand zwischen den Klauen kurzzeitig vergrößert wird und nach dem Hinterfassen des Steges in die Hinterschneidung sich wieder verringert.
Einclicken bedeutet, dass der Abstand zwischen den Klauen kurzzeitig verkleinert wird und nach dem Hinterfassen der Stege in die Hinterschneidung sich wieder vergrößert.

In beiden Fällen entsteht Formschluss, vorzugsweise Form- und Kraftschluss. Formschluss bedeutet dabei, dass die Bewegung des Spannteils quer zur Montageschienenlängsrichtung und damit vom Steg herunter gesperrt ist.

Hinterschneidung im hier gebrauchten Sinn kann eine in Montagenschienenlängsrichtung verlaufende Nut oder Rille sein oder auch durch einen Steg gebildet sein, der hinterfassbar ist.

In einer bevorzugten Ausführung weisen die Montageschienen ein geschlossenes Rechteckhohlprofil auf. Es können mit derartigen Stegen aber auch andere Profile ausgerüstet sein, z.B. Winkelprofile, Dreiecksprofile - notwendig ist nur eine Auflagefäche für die plattenförmigen Körper und eine vorzugsweise senkrecht dazu stehend Fläche, wo der oder die Stege angeordnet sind.
Bei einer bevorzugten Ausführung verfügen die Montageschienen über Anschlüsse für eine Anschlussverbindung zu einer Unterkonstruktion. Das können bei einer Dachmontage von Solarmodulen seitliche Anschlüsse an der Montageschiene für Dachhaken sein. Bei zwei vorhandenen Stegen kann ein Steg dann Bestandteil dieser Anschlüsse für die Montageschiene an die Unterkonstruktion sein.

Bevorzugt liegt ein Steg mit einer Stegfläche in der Ebene der Auflagefläche der Montageschiene für die plattenförmigen Körper.

Um die Herstellung der Clickverbindung mit dem oder den Stegen zu erleichtern bei gleichzeitiger Gewährleistung der Festigkeit der Verbindung Montageschiene - Niederhalter beim Verspannen sieht eine vorteilhafte Ausführung vor, dass die Klaue, die in die Hinterschneidung des ersten Steges, die sich auf der dem plattenförmigen Körper angewandten Seite befindet, eingreift, eine höhere Festigkeit und/oder geringere Elastizität aufweist als die jeweils andere Klaue.

So kann erreicht werden, dass bei der Herstellung der Clickverbindung nur eine Klaue verformt wird, nämlich die, die keine Tragfunktion beim Verspannen zu erfüllen hat.

Das Spannteil ist bei einer bevorzugten Ausführung an seinem von der Montageschiene abgewandten Ende unter einem Winkel (α) abgewinkelt und im abgewinkelten Abschnitt ist ein Gewinde für die Schraubverbindung zwischen dem Niederhalter und dem Spannteil angeordnet. Das Gewinde kann direkt in eine Bohrung des abgewinkelten Abschnittes eingeschnitten sein oder der abgewinkelte Abschnitt weist eine Aufnahme auf, in die eine Mutter für den Bolzen zum Verspannen eingebracht ist. Letzteres verlangt eine Zu- und Ausgangsbohrung für den Bolzen in der Aufnahme.

Der Winkel (α) sollte ein rechter oder ein spitzer Winkel, vorzugsweise zwischen 90° und 75° sein. So kann bei der Solarmodulmontage erreicht werden, dass die Achse der Schraubverbindung zwischen dem Niederhalter und dem Spannteil mit der Anschlussverbindung der Montageschiene an eine Unterkonstruktion in einer oder nahezu in einer Ebene liegen. Dadurch wird erreicht, dass es nicht bzw. nur zu sehr kleinen Versatzmomenten kommt. Infolge dessen werden nur geringe Torsionsmomente in das Schienenprofil eingetragen. Hierdurch ist es möglich, dass Materialeinsparungen am Schienenprofil vorgenommen werden können, wobei die Beanspruchbarkeit nicht negativ beeinträchtigt wird.

Eine weitere vorteilhafte Ausgestaltung des Montagesystems sieht vor, dass zur Herstellung der Aufclickverbindung der erste Steg oder ein nahe dem ersten Steg befindlicher Abschnitt der Montageschiene eine Aufnahmerille oder -nut für das Ende einer Klaue aufweist. Die Aufclickverbindung wird so stabilisiert.

Die erfindungsgemäße Lösung schließt ausdrücklich ein, dass die Montageschiene zwei auf einer Seite angeordnete Stege - wie oben beschrieben - aufweist und eine Aufnahmerille und das Spannteil drei Klauen - wie oben beschrieben - so dass bei der Montage von einer Auf- und Einclickverbindung bei der Verbindung der Klauen mit den Stegen Gebrauch gemacht werden kann.

Das erfindungsgemäße Montagesystem zeichnet sich auch dadurch aus, dass die Montageteile: Montageschienen, Niederhalter und Spannteil aus stranggepressten Profilen durch Ablängen und das Einbringen von Bohrungen und ggf eines Gewindes herstellbar sind.

Die Erfindung soll anhand der Zeichnungen erläutert werden. Es zeigen:
- Fig. 1: das Montagesystem mit einem Steg an der Montageschiene und auf diesem aufgeclickt ein Spannteil in einer Schnittdarstellung,
- Fig. 2: eine Detailansicht der Fig. 1 und
- Fig. 3: eine Ansicht der Fig. 1 in perspektivischer Darstellung,
- Fig. 4: das Montagesystem mit zwei Stegen an der Montageschiene und zwischen den Stegen eingeclicktem Spannteil in einer Schnittdarstellung,
- Fig. 5: eine Detailansicht der Fig. 4,
- Fig. 6: eine Ansicht der Fig. 4 in perspektivischer Darstellung und
- Fig. 7: eine Montageschiene mit zwei Stegen und einem Spannteil mit drei Klauen.

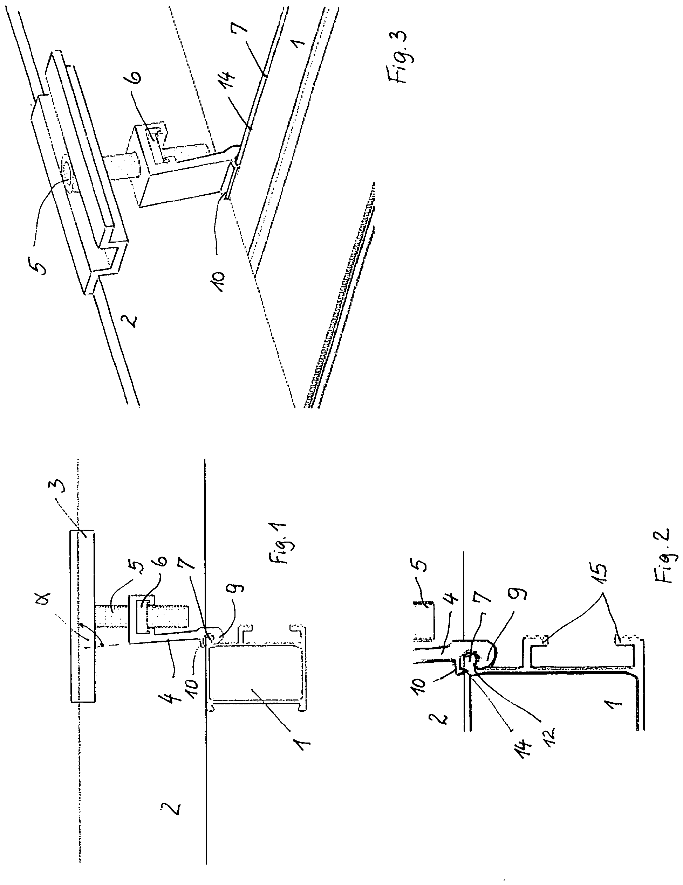

Die **Fig. 1 - 3** zeigen das Montagesystem für plattenförmige Körper 2 auf einer Auflagefläche von Montageschienen 1 mittels Befestigungsmitteln aus Spannteilen 4, Niederhaltern 3 für die plattenförmigen Körper 2 und einer Schraubverbindung 5, 6 zwischen dem Niederhalter 3 und dem Spannteil 4, wobei die Befestigungsmittel 3, 4, 5, 6 unter Einschluss der plattenförmigen Körper 2 mit den Montageschienen 1 verspannbar sind.

Der hier dargestellte plattenförmige Körper 2 ist ein Solarmodul, vorzugsweise gerahmt.

Die Montageschiene 1, deren Grundprofil durch ein geschlossenes Rechteckhohlprofil gebildet wird, weist beidseitig jeweils einen Steg 7 jeweils von der Montageschiene 1 wegweisend und in Montageschienenlängsrichtung verlaufend auf, wobei nur ein Steg 7 mit einem Spannteil 4 verbunden ist. Die beidseitige Steganordnung schafft die Voraussetzung dafür, entweder die eine oder die andere Montageschienenseite oder beide Montageschienenseiten unabhängig oder im Verbund wirkend für Anschlusszwecke zu nutzen.

Der Steg 7 liegt mit einer Stegfläche in der Ebene der Auflagefläche der Montageschiene 1 für die plattenförmigen Körper 2. Auf der dem plattenförmigen Körper 2 angewandten Seite besitzt der Steg 7 eine in Montageschienenlängsrichtung verlaufende Hinterschneidung 12. Ferner ist im Steg 7 oder in einem nahe dem Steg 7 befindlichen Abschnitt der Montageschiene 1 auf der dem plattenförmigen Körper 2 zugewandten Seite eine Aufnahmerille 14 im Montageschienenlängsrichtung verlaufend angeordnet.

Das Spannteil 4 weist an seinem der Montageschiene 1 zugewandten Ende zwei seitlich angeordneten Klauen 9, 10 auf, die auf den Steg 7 aufclickbar sind, wobei die Klaue 9 in die Hinterschneidung 12 und die Klaue 10 in die Aufnahmerille 14 unter Formschluss, vorzugsweise unter Form- und Kraftschluss eingreifen.

Die bei der Herstellung der Clickverbindung in die Hinterschneidung 12 des Steges 7 eingreifende Klaue 9 weist eine höhere Festigkeit und /oder geringere Elastizität auf als die andere Klaue 10, da nur die Klaue 9 beim Verspannen eine Tragfunktion hat. Bei der Herstellung der Clickverbindung wird so nur die Klaue 10 gegenüber der Klaue 9 bewegt, um den Abstand zwischen diesen kurzzeitig zu vergrößern.

Das Spannteil 4 ist an seinem von der Montageschiene 1 abgewandten Ende unter einem Winkel (α) abgewinkelt. Im abgewinkelten Abschnitt ist ein Gewinde 6 für die Schraubverbindung 5, 6 zwischen dem Niederhalter 3 und dem Spannteil 4 angeordnet. Das Gewinde 6 ist hier Bestandteil einer Mutter, die in eine Aufnahme des abgewinkelten Abschnitts eingebracht ist.

Der Winkel (α) ist ein spitzer Winkel, der vorzugsweise 90° bis 75° beträgt. Damit wird erreicht, dass die Achse der Schraubverbindung 5, 6 zwischen dem Niederhalter 3 und dem Spannteil 4 mit der Verbindung der Montageschiene 1 und der Unterkonstruktion in einer oder nahezu in einer Ebene liegen.

Ferner weist die Montageschiene 1 Anschlüsse 15 für eine Anschlussverbindung zu einem nicht dargestellten Unterbaukonstruktion auf. Das können bei der Dachmontage z.B. Anschlüsse 15 für einen Dachhaken sein.

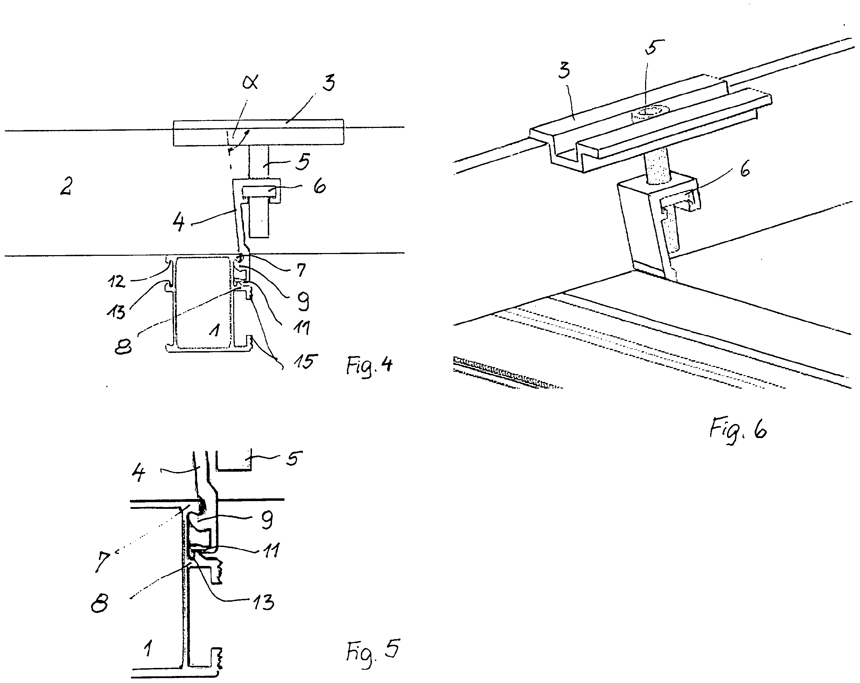

Die **Fig. 4 - 6** zeigen das Montagesystem mit zwei Stegen 7, 8 an der Montageschiene 1 und zwischen den Stegen eingedicktem Spannteil 4.

Der erste Steg 7 besitzt auf der den plattenförmigen Körpern 2 angewandten Seite eine in Montageschienenlängsrichtung verlaufende Hinterschneidung 12, in analoger Weise wie oben beschrieben.

Der zweite Steg 8 ist beabstandet zum ersten Steg 7 angeordnet und besitzt auf der dem ersten Steg 7 zugewandten Seite eine Hinterschneidung 13.

Der zweite Steg 8 kann ein gesonderter Steg sein oder wie gezeigt als Bestandteil des Anschlusses 15 für die Verbindung der Montageschiene 1 mit einer Unterkonstruktion ausgeführt sein.

Das Spannteil 4 weist an seinem der Montageschiene 1 zugewandten Ende zwei seitlich angeordnete Klauen 9, 11 auf, die in den Raum zwischen den beiden Stegen 7, 8 einclickbar sind, wobei die Klaue 9 in die Hinterschneidung 12 und die Klaue 11 in die Hinterschneidung 13 unter Formschluss, vorzugsweise unter Form- und Kraftschluss eingreifen.

Die bei der Herstellung der Clickverbindung in die Hinterschneidung 12 des Steges 7 eingreifende Klaue 9 weist eine höhere Festigkeit und /oder geringere Elastizität auf als die andere Klaue 11, da nur die Klaue 9 beim Verspannen eine Tragfunktion hat. Bei der Herstellung der Clickverbindung wird so nur die Klaue 11 gegenüber der Klaue 9 bewegt, um den Abstand zwischen diesen kurzzeitig zu verringern.

Hinsichtlich der weiteren Ausgestaltungen wird auf die Ausführungen zu den Fig. 1 - 3 verwiesen.

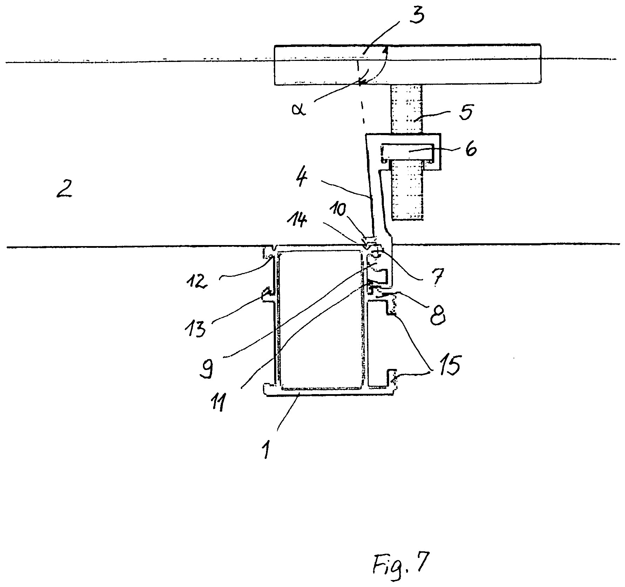

**Fig. 7** zeigt eine Montageschiene 1 mit zwei seitlichen Stegen 7, 8 und ein Spannteil 4 mit drei Klauen 9, 10, 11. Die Verbindung des Spannteils 4 mit der Montageschiene 1 erfolgt dann durch ein Auf- und Einclickverbindung.

### Bezugszeichenliste

- 1: Montageschiene
- 2: plattenförmiger Körper/Solarmodul
- 3: Niederhalter
- 4: Spannteil
- 5: Bolzen
- 6: Gewinde
- 7: erster Steg
- 8: zweiter Steg
- 9: Klaue
- 10: Klaue
- 11: Klaue
- 12: Hinterschneidung
- 13: Hinterschneidung
- 14: Aufnahmerille
- 15: Anschlüsse für eine Verbindung zur Unterkonstruktion

## Patentansprüche

1. Montagesystem für plattenförmige Körper (2) auf einer Auflagefläche von Montageschienen (1) mittels Befestigungsmitteln, umfassend zumindest eine Montageschiene (1) und zumindest ein Befestigungsmittel aus Spannteilen (4), Niederhaltern (3) für die plattenförmigen Körper (2) und einer Schraubverbindung (5, 6) zwischen den Niederhaltern (3) und den Spannteilen (4), wobei die Verbindung zwischen den Spannteilen (4) und den Montageschienen (1) durch eine mindestens formschlüssige Clickverbindung herstellbar ist und die Befestigungsmittel (3, 4, 5, 6) unter Einschluss der plattenförmigen Körper (2) mit den Montageschienen (1) verspannbar sind, wobei
die Montageschienen (1) ein- oder beidseitig jeweils einen Steg (7) oder zwei Stege (7, 8) jeweils von der Montageschiene (1) wegweisend und in Montageschienenlängsrichtung verlaufend aufweisen,
wobei der erste Steg (7) auf der den plattenförmigen Körpern (2) angewandten Seite eine in Montageschienenlängsrichtung verlaufende Hinterschneidung (12) besitzt und
bei einem zweiten Steg (8) dieser beabstandet zum ersten Steg (7) angeordnet ist und auf der dem ersten Steg (7) zugewandten Seite eine Hinterschneidung (13) aufweist,
das einschenklig ausgebildete Spannteil (4) an dem der Montageschiene (1) zugewandten Ende des einen Schenkels mindestens zwei seitlich angeordneten Klauen (9, 10, 11) aufweist, die auf den Steg (7) aufclickbar sind und/oder in den Raum zwischen den beiden Stegen (7, 8) einclickbar sind.

2. Montagesystem nach Anspruch 1, **dadurch gekennzeichnet, dass**
die Montageschienen (1) ein geschlossenes Rechteckhohlprofil aufweisen.

3. Montagesystem nach Anspruch 1 oder 2, **dadurch gekennzeichnet, dass**
die Montageschienen(1) über Anschlüsse (15) für eine Verbindung zu einer Unterkonstruktion verfügt.

4. Montagesystem nach einem der Ansprüche 1 bis 3, **dadurch gekennzeichnet, dass**
der erste Steg (7) mit einer Stegfläche in der Ebene der Auflagefläche der Montageschiene (1) für die plattenförmigen Körper (2) liegt.

5. Montagesystem nach Anspruch 3 oder 4, **dadurch gekennzeichnet, dass**
der zweite Steg (8) Bestandteil des Anschlusses (15) für die Verbindung der Montageschiene (1) mit der Unterkonstruktion ist.

6. Montagesystem nach einem der Ansprüche 1 bis 5, **dadurch gekennzeichnet, dass**
die bei der Herstellung der Clickverbindung in die Hinterschneidung (12) des ersten Steges (7) eingreifende Klaue (9) eine höhere Festigkeit und /oder geringere Elastizität aufweist als die jeweils andere Klaue (10 oder 11).

7. Montagesystem nach einem der Ansprüche 1 bis 6, **dadurch gekennzeichnet, dass**
das Spannteil (4) an seinem von der Montageschiene (1) abgewandten Ende unter einem Winkel (α) abgewinkelt ist und im abgewinkelten Abschnitt ein Gewinde (6) für die Schraubverbindung (5, 6) zwischen dem Niederhalter (3) und dem Spannteil (4) angeordnet ist.

8. Montagesystem nach Anspruch 7, **dadurch gekennzeichnet, dass**
der Winkel (α) ein rechter oder ein spitzer Winkel ist, vorzugsweise 90° bis 75° beträgt.

9. Montagesystem nach Anspruch 7 oder 8, **dadurch gekennzeichnet, dass**
der Winkel (α) so gewählt ist, dass die Achse der Schraubverbindung (5, 6) zwischen dem Niederhalter (3) und dem Spannteil (4) mit der Verbindung der Montageschiene (1) und der Unterkonstruktion in einer oder nahezu in einer Ebene liegen.

10. Montagesystem nach einem der Ansprüche 1 bis 9, **dadurch gekennzeichnet, dass**
zur Herstellung der Aufclickverbindung der erste Steg (7) oder ein nahe dem ersten Steg (7) befindlicher Abschnitt der Montageschiene (1) eine Aufnahmerille (14) oder -nut für das Ende der Klaue (10) aufweist.

11. Montagesystem nach einem der Ansprüche 1 bis 10, **dadurch gekennzeichnet, dass**
die Montageschiene (1) zwei auf einer Seite angeordnete Stege (7, 8) aufweist und eine Aufnahmerille (14) und das Spannteil (4) drei Klauen (9, 10, 11), so dass bei der Montage von einer Auf- und Einclickverbindung bei der Verbindung der Klauen (9, 10, 11) mit den Stegen (7, 8) Gebrauch gemacht werden kann.

## Claims

1. A mounting system for plate-like bodies (2) on a support surface of mounting rails (1) using fastening means, comprising at least one mounting rail (1) and at least one fastening means consisting of tensioning parts (4), downholders (3) for the plate-like bodies (2) and a screw connection (5, 6) between the downholders (3) and the tensioning parts (4), whereby the connection between the tensioning parts (4) and the mounting rails (1) is producible via an at least form-fit click connection, and the fastening means (3, 4, 5, 6) are tensionable with the mounting rails (1), including the plate-like bodies (2), whereby
the mounting rails (1) have one bridge (7) or two bridges (7, 8) on one or both sides respectively, respectively pointing away from the mounting rail (1) and running in the direction of the mounting rail,
whereby the first bridge (7) on the side facing away from the plate-like bodies (2) has an undercut (12) that runs in the longitudinal mounting rail direction, and
with a second bridge (8), this is arranged at a distance from the first bridge (7) and has an undercut (13) on the side facing towards the first bridge (7),
the single-armed tensioning part (4) on the end of the one arm facing towards the mounting rail (1) has at least two claws (9, 10, 11) arranged at the side, which are clickable onto the bridge (7) and/or are clickable into the space between the two bridges (7, 8) .

2. The mounting system according to claim 1,
**characterized in that**
the mounting rails (1) have a closed rectangular profile.

3. The mounting system according to claim 1 or 2,
**characterized in that**
the mounting rails (1) have connections (15) for a connection to a substructure.

4. The mounting system according to any one of claims 1 to 3,
**characterized in that**
the first bridge (7) lies with one bridge surface on the plane of the contact surface of the mounting rail (1) for the plate-like bodies (2).

5. The mounting system according to claim 3 or 4,
**characterized in that**
the second bridge (8) is a component of the connection (15) for the connection of the mounting rail (1) with the substructure.

6. The mounting system according to any one of claims 1 to 5,
**characterized in that**
the claw (9) that engages during the creation of the click connection into the undercut (12) of the first bridge (7) has a greater rigidity and/or lower elasticity than the respective other claw (10 or 11) .

7. The mounting system according to any one of claims 1 to 6,
**characterized in that**
the tensioning part (4) is angled at its end facing away from the mounting rail (1) at an angle (α), and in the angled section a thread (6) for a screw connection (5, 6) is arranged between the downholder (3) and the tensioning part (4).

8. The mounting system according to claim 7,
**characterized in that**
the angle (α) is a right-angle or an acute angle, preferably of 90° to 75°.

9. The mounting system according to claim 7 or 8,
**characterized in that**
the angle (α) is selected in such a manner that the axis of the screw connection (5, 6) between the downholder (3) and the tensioning part (4) lies on the same or almost the same plane as the connection of the mounting rail (1) and the substructure.

10. The mounting system according to any one of claims 1 to 9,
**characterized in that**
in order to create the click-on connection, the first bridge (7) or a section of the mounting rail (1) close to the first bridge (7) has a holding groove (14) or notch for the end of the claw (10).

11. The mounting system according to any one of claims 1 to 10,
**characterized in that**
the mounting rail (1) has two bridges (7, 8) arranged on one side and a holding groove (14) and the tensioning part (4) has three claws (9, 10, 11), so that during mounting, a click-on and click-in connection can be used when connecting the claws (9, 10, 11) with the bridges (7, 8).

## Revendications

1. Système de montage pour corps en forme de plaque (2) sur une surface de support de rails de montage (1) au moyen d'éléments de fixation, comprenant au moins un rail de montage (1) et au moins un élément de fixation constitué de pièces de serrage (4), de serre-flans (3) pour les corps en forme de plaque (2) et d'une connexion à vis (5, 6) entre le serre-flans (3) et les pièces de serrage (4), la connexion entre les pièces de serrage (4) et les rails de montage (1) étant réalisable par un raccord à enclenchement au moins par correspondance de forme et les éléments de fixation (3, 4, 5, 6) pouvant être serrés en enserrant le corps en forme de plaque (2) avec les rails de montage (1), où
les rails de montage (1) présentent chacun sur un ou sur les deux côtés une traverse (7) ou deux traverses (7, 8) partant du rail de montage (1) et s'étendant dans la direction longitudinale du rail de montage,
la première traverse (7) sur le côté distant du corps en forme de plaque (2) présente une contre-dépouille (12) s'étendant dans la direction longitudinale du rail de montage, et où
en cas de deuxième traverse (8), celle-ci est espacée de la première traverse (7) et présente une contre-dépouille (13) sur le côté proche de la première traverse (7),
la pièce de serrage (4) à configuration à une seule branche présente à l'extrémité de la branche unique opposée au rail de montage (1) au moins deux griffes (9, 10, 11) latérales, enclenchables sur la traverse (7) et/ou enclenchables dans l'espace entre les deux traverses (7, 8).

2. Système de montage selon la revendication 1, **caractérisé en ce que**
les rails de montage (1) sont à profil creux rectangulaire fermé.

3. Système de montage selon la revendication 1 ou la revendication 2, **caractérisé en ce que**
les rails de montage (1) disposent de raccords (15) pour une connexion à une sous-construction.

4. Système de montage selon l'une des revendications 1 à 3, **caractérisé en ce que**
la première traverse (7) repose par une surface de traverse sur le plan de la surface de support du rail de montage (1) pour les corps en forme de plaque (2).

5. Système de montage selon la revendication 3 ou la revendication 4, **caractérisé en ce que**
la deuxième traverse (8) est un composant du raccord (15) pour la connexion du rail de montage (1) à la sous-construction.

6. Système de montage selon l'une des revendications 1 à 5, **caractérisé en ce que**
la griffe (9) s'engageant dans la contre-dépouille (12) de la première traverse (7) lors de la réalisation de la connexion par enclenchement présente une résistance supérieure et/ou une élasticité moindre à celles de l'autre griffe (10 ou 11) .

7. Système de montage selon l'une des revendications 1 à 6, **caractérisé en ce que**
la pièce de serrage (4) est pliée suivant un angle (α) à son extrémité distante du rail de montage (1) et un filet (6) est présenté dans la partie pilée pour la connexion à vis (5, 6) entre le serre-flan (3) et la pièce de serrage (4).

8. Système de montage selon la revendication 7, **caractérisé en ce que**
l'angle (α) est un angle droit ou un angle aigu préférentiellement compris entre 90° et 75°.

9. Système de montage selon la revendication 7 ou la revendication 8, **caractérisé en ce que** l'angle (α) est sélectionné de sorte que l'axe de la connexion à vis (5, 6) entre le serre-flan (3) et la pièce de serrage (4) est compris ou sensiblement compris dans le même plan que la connexion du rail de montage (1) et la sous-construction.

10. Système de montage selon l'une des revendications 1 à 9, **caractérisé en ce que**
pour la réalisation de la connexion par enclenchement, la première traverse (7) ou une partie du rail de montage (1) proche de la première traverse (7) présentent une gouttière ou une rainure de réception (14) pour l'extrémité de la griffe (10).

11. Système de montage selon l'une des revendications 1 à 10, **caractérisé en ce que**
le rail de montage (1) présente deux traverses (7, 8) disposées sur un côté et une gouttière de réception (14), et la pièce de serrage (4) comporte trois griffes (9, 10, 11), si bien que lors du montage, il peut être fait usage d'une connexion par accrochage et enclenchement pour la connexion des griffes (9, 10, 11) avec les traverses (7, 8).
